# EUROPÄISCHE PATENTSCHRIFT

(11) **EP 1 260 111 B1**
(45) Veröffentlichungstag und Bekanntmachung des Hinweises auf die Patenterteilung: **05.04.2006**
(21) Anmeldenummer: 00904790.3
(22) Anmeldetag: 29.02.2000
(51) Int. Cl.: H04Q 7/38, G08G 1/0968, G08G 1/127

(54) **VERFAHREN UND SYSTEM ZUR COMPUTERGESTÜTZTEN WEGWEISUNG EINES BENUTZERS EINES MOBILFUNKNETZES ZU EINEM MOBILEN BEZUGSPUNKT**
METHOD AND SYSTEM FOR GUIDING A USER OF A MOBILE RADIOTELEPHONE NETWORK TO A MOBILE REFERENCE POINT IN A COMPUTER-AIDED MANNER
PROCEDE ET SYSTEME POUR GUIDER DE FACON ASSISTEE PAR ORDINATEUR UN UTILISATEUR D'UN RESEAU DE TELEPHONIE MOBILE JUSQU'A UN POINT DE REFERENCE MOBILE

(43) Veröffentlichungstag der Anmeldung: 27.11.2002
(73) Patentinhaber: Swisscom Mobile AG, 3050 Bern (CH)
(72) Erfinder: RITTER, Rudolf, CH-3052 Zollikofen (CH)
(74) Vertreter: BOVARD AG
(86) Internationale Anmeldenummer: PCT/CH2000/000113
(87) Internationale Veröffentlichungsnummer: WO 2001/065878

(56) Entgegenhaltungen:
- WO-A-96/07110
- DE-A- 19 521 929
- US-A- 5 422 816

## Beschreibung

Die vorliegende Erfindung beschreibt ein System und Verfahren zur Festlegung eines mobilen Bezugspunktes und zur computergestützten Wegweisung eines mit einem Mobilfunkgerät ausgerüsteten Benutzers zu diesem Bezugspunkt. Auf eine mittels des Mobilfunkgeräts durchgeführte Anfrage übermittelt eine Zentraleinheit Wegweisungsdaten über ein Mobilfunknetz an das Mobilfunkgerät. Der Benutzer hat insbesondere die Möglichkeit, Informationen betreffend die zum Bezugspunkt führenden öffentlichen Verkehrsmittel abzurufen und Billette dafür zu beziehen.

Global-Tracking-Systems (GTS) zur Standortbestimmung von beweglichen Objekten sind in verschiedenen Bereichen der Technik bekannt. Die Systeme sind dadurch charakterisiert, dass sich über eine Zentraleinheit die Position eines bestimmten Objektes lokalisieren lässt. Insbesondere Car Tracking Systems zur Standortbestimmung gestohlener oder verlorener Fahrzeuge nehmen unter den GTS eine wichtige Rolle ein. In der USA machte z.B. der durch Autodiebstahl entstandene jährliche Schaden in den 90er Jahren die Hälfte des Gesamtwertes aller gestohlenen Gegenstände aus. Im speziellen seien unter den GTS jene Systeme erwähnt, welche das Mobilfunknetz zur Standortbestimmung benutzen. Sie lassen sich in mehrere Gruppen unterteilen. Eine erste Gruppe berechnet die Bewegung des Fahrzeuges, indem in genügend kurzen Abständen Fahrparameter wie Geschwindigkeit, Richtung der Räder etc. an eine Zentraleinheit übermittelt werden. Der neue Standort wird relativ zum alten Standort von der Zentraleinheit kontinuierlich korrigiert und registriert. Diese Systeme benötigen jedoch von Zeit zu Zeit eine erneute Eichung mit absoluten Positionsangaben. Eine andere Möglichkeit eines GTS verwendet Signalunterschiede der Basisstationen des Mobilfunknetzes zur Positionsbestimmung des Fahrzeuges. Die Positionen der Basisstationen sind dabei bekannt und unter Auswertung der Signalparameter der verschiedenen Stationen kann mit Triangulations- oder Trilateralisationsmethoden die Position eines Fahrzeuges bestimmt werden, welches selbst ebenfalls über Mobilfunkmittel verfügen muss. Üblicherweise werden zur Berechnung Signalunterschiede in Stärke, Phase oder Zeit benutzt. Ein weiteres GTS verwendet im Fahrzeug eingebaute Global-Positioning-Systeme (GPS) kombiniert mit Mobilfunkmitteln. Der Standort des Fahrzeuges kann so zu einem beliebigen Zeitpunkt exakt innerhalb der Ungenauigkeit des GPS bestimmt werden. In den Patentschriften US4891650 und US3680121 werden Beispiele solcher Systeme beschrieben. Letztere Systeme haben den Vorteil, dass sie keine permanente Überwachung der Bewegung des Fahrzeuges brauchen. Die Systeme können bei Bedarf zur Positionsbestimmung beispielsweise mit einem DTMF (Dual Tone Multifrequency) Signal aktiviert werden. Bei GTS, die das Mobilfunknetz benutzen, besteht in manchen Systemen für einen Benutzer die Möglichkeit, zur Lokalisierung des Fahrzeuges mit einem Mobilfunkgerät auf die Zentraleinheit zuzugreifen. Beispiele dafür finden sich u.a. in den Patentschriften US5208756 und US5918180. Der Stand der Technik erlaubt dem Benutzer eines Mobilfunknetzes jedoch nicht, die Bezugspunkte, welche er von seinem Standort aus Lokalisieren möchte, frei festzulegen. Insbesondere setzt der Stand der Technik stets Kommunikationsmittel und andere technische Vorrichtungen am Bezugspunkt voraus. Ein anderer Nachteil ist, dass sich die Bezugspunkte nicht frei von Benutzer zu Benutzer transferieren lassen. Weiter fehlt im Stand der Technik die Möglichkeit einer differenzierten graphischen Führung des Benutzers von seinem Standort zum Standort des Bezugspunktes. Als weiterer Stand der Technik sind die Patentschriften WO 96/07110 und DE 19521929 zu erwähnen. Beide Dokumente beschreiben die Wegweisung eines Benutzers mit einer mobile Empfangseinheit mittels einer Zentraleinheit. Beide Dokumente erlauben dem Benutzer eines Mobilfunknetzes jedoch nicht, die Bezugspunkte, welche er von seinem Standort aus Lokalisieren möchte, frei festzulegen. Dies betrifft insbesondere den Fall, dass als Bezugspunkt eine andere mobile Einheit Bezug gewählt werden soll. Ebenso lassen sich die Bezugspunkte nicht frei von Benutzer zu Benutzer transferieren.

Es ist eine Aufgabe der Erfindung, ein neues Verfahren und System zur Festlegung eines mobilen Bezugspunktes und zur computergestützten Führung des Benutzers zu diesem Bezugspunkt vorzuschlagen. Insbesondere soll der Bezugspunkt für den Benutzer zu jeder Zeit frei wählbar und festlegbar sein.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass der Benutzer eines Mobilfunknetzes mindestens einen mobilen Bezugspunkt festlegt, wobei Bezugspunktdaten über das Mobilfunknetz an eine Zentraleinheit übertragen werden, und die Bezugspunktdaten der Rufnummer des Mobilfunkgeräts oder einer anderen ldentifikationnummer (ID) zugeordnet in einer Datenbank der Zentraleinheit gespeichert werden. Zur Festlegung des Bezugspunktes wird der Benutzer durch ein Bezugspunktmodul eines Mobilfunkgeräts aufgefordert, die zur Festlegung eines Bezugspunktes benötigten Angaben einzugeben. Das Bezugsmodul berechnet, falls notwendig, die von der Zentraleinheit benötigten Positionsangaben und leitet den Datentransfer mit der Zentraleinheit ein. Das Bezugspunktmodul kann softwaremässig oder hardwaremässig implementiert sein. Die Zuordnung kann beispielsweise durch die Verknüpfung zweier Identifikationscodes wie MSISDN (Mobile Subscriber ISDN), IMSI (International Mobile Subscriber Identifikation) oder anderen IDs (Identification Number) geschehen, wobei der Bezugspunkt z.B. die MSISDN eines anderen Mobilfunkgerätes oder des aktuellen Standortes des Benutzers sein kann. Die Positionsangaben müssen nicht notwendigerweise vom Bezugspunktmodul berechnet oder vom Benutzer eingegeben werden, sondern können beispielsweise auch von der Zentraleinheit unter Zuhilfenahme von Signalparameter der Basisstationen des Mobilfunknetzes bestimmt werden. Die Wegweisungsdaten werden in Form von kartographischen, auf einer dem Mobilfunkgerät verfügbaren Anzeige graphisch darstellbaren Daten oder in Form von Listen mit Ortsbezeichnungen von der Zentraleinheit an das Mobilfunkgerät übermittelt, wobei die Wegweisungsdaten den Weg vom aktuellen Standort zum festgelegten Bezugspunkt betreffen. Als Anzeige kann beispielsweise ein im Mobilfunkgerät integriertes Display verwendet werden aber es ist auch eine externe, mit dem Mobilfunkgerät verbundene Anzeige, wie ein VRD (Virtual Retinal Display) vorstellbar. Für die Verbindung zur Zentraleinheit können z.B. Protokolle wie HSCSD (High Speed Circuit Switched Data), GPRS (General Packet Radio Service) oder UMTS (Universal Mobile Telecommunication System) verwendet werden. Im Gegensatz zum Stand der Technik kann der Benutzer einen beliebigen Bezugspunkt z.B. in der Form einer MSISDN eines anderen Mobilfunkgeräts als mobilen Bezugspunkt festlegen. Insbesondere besteht die Möglichkeit für den Benutzer mehrere Bezugspunkte zu definieren. Die Verknüpfung des Bezugspunktes mit einem Identifikationscode in der Zentraleinheit erlaubt dem Benutzer eine einfache Selektion eines bestimmten, festgelegten Bezugspunktes. Durch die Zentraleinheit erhält der Benutzer eine graphische, computergestützte Wegweisung zum Bezugspunkt.

In einer Ausführungsvariante legt der Benutzer als Bezugspunkt mobile Kommunikationsmittel fest, die beispielsweise tragbar oder in einem Fahrzeug angebracht sind. Z.B. ordnet er der MSISDN des Mobilfunkgerätes die MSISDN der mobilen Kommunikationsmittel zu. Die Verknüpfung kann sowohl durch ein Bezugspunktmodul der mobilen Kommunikationsmittel z.B. des Fahrzeuges geschehen, als auch durch ein Bezugspunktmodul des Mobilfunkgeräts. Einer der Vorteile eines Systems oder eines Verfahrens gemäss dieser Ausführungsvariante ist, dass in seiner Verwendung als Car Tracking System ausser beispielsweise einem zweiten Mobilfunkgerät keine weiteren technischen Vorrichtungen im Fahrzeug benötigt werden. Ein anderer Vorteil ist, dass sich diese Ausführungsvariante auch zur Überwachung beweglicher Objekte jeder Art eignet, wie z.B. Kinder oder Tiere, die mit einem Mobilfunkgerät ausstattet sind.

In einer Ausführungsvariante umfassen die Kommunikationsmittel eines mobilen Bezugspunktes und/oder das Mobilfunkgerät des Benutzers ein GPS-Modul (Global-Positioning-System), welches GPS-Modul mit einem GPS-Empfänger ausgerüstet ist und mittels des GPS-Signals den momentanen Standort des Benutzers bzw. des mobilen Bezugspunktes berechnet. Die Positionsangaben des GPS-Moduls werden in der Zentraleinheit abgespeichert. Bei mobilen Bezugspunkten ist eine periodische Aktualisierung der Positionsangaben vorstellbar. Es ist aber auch möglich, zur Positionsbestimmung nur bei Bedarf die Vorrichtung des mobilen Bezugspunktes, beispielsweise durch ein DTMF (Dual Tone Multifrequency) Signal zu aktivieren. Einer der Vorteile eines Systems oder eines Verfahrens gemäss dieser Ausführungsvariante ist, dass die Zentraleinheit nicht durch Positionsberechnungen des Bezugspunktes und/oder des Mobilfunkgerätes des Benutzers, z.B. mittels Triangulations-und/oder Trilateralisationsmethoden belastet wird.

In einer weiteren Ausführungsvariante wird die Position des Bezugspunktes und/oder des Mobilfunkgerätes des Benutzers durch Triangulations-und/oder Trilateralisationsmethoden im Mobilfunknetz durch ein Triangulations-und/oder Trilateralisationsmodul der Zentraleinheit bestimmt. Zur Positionsberechnung werden Signalunterschiede von Basisstationen des Mobilfunknetzes z.B. in Stärke, Phase oder Zeit verwendet. Ein System oder ein Verfahren gemäss dieser Ausführungsvariante hat den Vorteil, dass es neben dem Mobilfunkgerät und im Falle eines mobilen Bezugspunktes neben den mobilen Kommunikationsmitteln keine weiteren technischen Vorrichtungen wie z.B. GPS-Module braucht. Dies kann insbesondere ein Vorteil bezüglich des Gewichts und der Kosten des Systems sein.

In einer weiteren Ausführungsvariante umfasst das System In-House-Positioning Systeme zur Positionsbestimmung des Mobilfunkgerätes des Benutzers und/oder des mobilen Bezugspunktes. Das Mobilfunkgerät und/oder die Kommunikationsmittel des mobilen Bezugspunktes besitzen in dieser Ausführungsvariante eine Schnittstelle, wie z. B. eine kontaktlose, hochfrequente Funkschnittstelle wie Bluetooth zu den In-House-Positioning Systemen. Die In-House Positionsangaben, welche die genaue Position des Mobilfunkgerätes und/oder der Kommunikationsmittel umfassen, werden über die Schnittstelle vom In-House-Positioning System an das Bezugspunktmodul des Mobilfunkgeräts bzw. der Kommunikationsmittel des mobilen Bezugspunktes übermittelt und das Bezugsmodul leitet den Datentransfer der Positionsangaben an die Zentraleinheit ein. Die In-House Positionsangaben können beispielsweise Stockwerk, Parkplatznummer etc. umfassen. Einer der Vorteile eines Systems gemäss dieser Ausführungsvariante ist, dass die Positionsangaben innerhalb eines Gebäudes auch Informationen, wie z.B. Parkplatznummer und/oder Stockwerk umfassen können.

In einer Ausführungsvariante werden bei der computergestützten Benutzerführung zusätzlich zu den geographischen Informationen, Informationen betreffend öffentliche Verkehrsmittel dargestellt, welche öffentlichen Verkehrsmittel vom Benutzer verwendet werden können, um von seinem Standort zum Bezugspunkt zu gelangen. Diese Informationen können z.B. Preise, Abfahrtsort, Fahrzeiten und/oder Anzahl der noch freien Plätze beinhalten. Diese Ausführungsvariante eignet sich allgemein für Reisen mit öffentlichen Verkehrsmitteln, indem der Benutzer das Reiseziel als Bezugspunkt wählt.

In einer Ausführungsvariante umfasst die Zentraleinheit ein Billettemodul, welches dem Benutzer erlaubt, Billette für öffentliche Verkehrsmittel und Ähnliches über das Mobilfunkgerät zu beziehen und/oder Platzreservationen vorzunehmen. Die Billette können für den Weg zwischen dem Standort des Benutzers und dem festgelegten Bezugspunkt benutzt werden. Das Billettemodul kann softwaremässig oder hardwaremässig implementiert sein. Es übermittelt die Reservationen und/oder bestätigt den Bezug der Billette bei einer Verwaltungseinheit der öffentlichen Verkehrsbetriebe. Diese Ausführungsvariante hat die gleichen Vorteile wie die vorhergehende Ausführungsvariante.

In einer Ausführungsvariante übermittelt der Benutzer mittels eines Transfermoduls des Mobilfunkgeräts einen von ihm festgelegten Bezugspunkt an mindestens einen anderen Benutzer des Mobilfunknetzes. Dazu kann z.B. SMS (Short Message Service), USSD (Unstructered Supplementary Service Data), Webmail mit WAP (Wireless Application Protocol) oder andere zukünftige Techniken wie MexE (Mobile Execution Environment) verwendet werden. Die Daten können verschlüsselt oder unverschlüsselt und/oder signiert oder unsigniert übermittelt werden. Das Transfermodul konvertiert die Angaben betreffend den Bezugspunkt in eine übermittelbare Form und kann entweder softwaremässig oder hardwaremässig implementiert sein. Diese Ausführungsvariante hat den Vorteil, dass einem oder mehreren anderen Benutzern des Mobilfunknetzes ein Bezugspunkt, z.B. ein Treffpunkt etc., übermittelt werden kann, ohne dass der Benutzer dafür besorgt sein muss, wie die anderen Benutzer von ihren verschiedenen Standorten zum Bezugspunkt gelangen und ohne dass er lange und komplizierte Wegbeschreibungen an seine Nachricht anfügen müsste.

In einer Ausführungsvariante umfasst das Mobilfunkgerät des Benutzers ein Modul zur Bestimmung der relativen Position des Mobilfunkgerätes bezüglich den Himmelsrichtungen. Dies kann beispielsweise in Form eines eingebauten, digitalen Kompasses sein. Das Mobilfunkgerät dieser Ausführungsvariante stellt die kartographischen Wegweisungsdaten entsprechend der relativen Position des Mobilfunkgeräts zu den Himmelsrichtungen dar. Diese Ausführungsvariante vereinfacht die Wegweisung des Benutzers, da der Benutzer bei waagrechter Stellung der Anzeige des Mobilfunkgerätes die kartographischen Wegweisungsdaten wie z.B. Orts- oder Landkarten, so ausgerichtet dargestellt erhält, dass der Benutzer sich nicht überlegen muss, wie die dargestellten Karten und die Umgebung sich bezüglich den Himmelsrichtungen entsprechen. In einer vereinfachten Ausführungsvariante können auch nur die aktuellen Himmelsrichtungen auf der Anzeige des Mobilfunkgerätes angezeigt werden, ohne dass die kartographischen Wegweisungsdaten ausgerichtet dargestellt werden. Der Benutzer kann die dargestellten Karten durch waagrechtes Drehen des Mobilfunkgerätes selbständig gemäss den Himmelsrichtungen ausrichten.

Es ist noch einmal anzufügen, dass die Ausführungsvarianten mit mobilem Bezugspunkt sich keineswegs auf die Lokalisierung von Fahrzeugen beschränken. Ohne abschliessend zu sein, können auf diese Weise ebenso Tiere, Kinder und/oder Personen lokalisiert und/oder überwacht werden, indem man sie mit einem Mobilfunkgerät ausstattet und ihr Mobilfunkgerät als mobilen Bezugspunkt festlegt. Dies kann z.B. nützlich sein bei Freizeitaktivitäten, wie dem Besuch von grossen Vergnügungsparks oder Sportgebieten, wie das z.B. beim Skilaufen häufig der Fall ist, beim Einkaufen in grossen Einkaufszentren etc. Wie zum Teil bereits darauf hingewiesen wurde, finden auch die Ausführungsvarianten mit stationärem Bezugspunkt weite Anwendungsmöglichkeiten, da diese Ausführungsvarianten neben dem Mobilfunkgerät des Benutzers keine weiteren Vorrichtungen benötigen. Anwendungsgebiete sind der Tourismus im Allgemeinen, Reisen und Aufenthalte an Orten, die dem Benutzer unbekannt oder nur ungenügend bekannt sind. Es lässt sich vorstellen, dass der Benutzer beispielsweise in einer fremden Stadt seinen Ausgangsort, wie z.B. das Hotel, der Bahnhof etc. als Bezugspunkt festlegt, dann sein Einkäufe tätigt, um am Schluss mit seinem Mobilfunkgerät sicher zum Ausgangsort zurückzufinden. Oder dass in einem Tourismusinformationsbüro einer Stadt gesuchte Orte dem Touristen auf sein Mobilfunkgerät elektronisch übermittelt werden, welche Orte dieser dann ohne langwieriges Erklären mit u.U. noch sprachlichen Verständigungsproblemen und ohne aufwendiges Kartenmaterial selbständig findet. Als letztes Beispiel sei die Organisation einer Konferenz mit vielen Teilnehmern aus verschieden Orten aufgeführt. Die Konferenzorganisatoren können mit der Einladung jedem Teilnehmer z.B. via SMS die Standorte des Konferenzsaals und des Hotels des Teilnehmers als Bezugspunkte senden. Jeder Teilnehmer kann damit die für ihn individuelle Reise- und Weginformation mit seinem Mobilfunkgerät einfach abfragen.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende einzige beigelegte Figur illustriert:

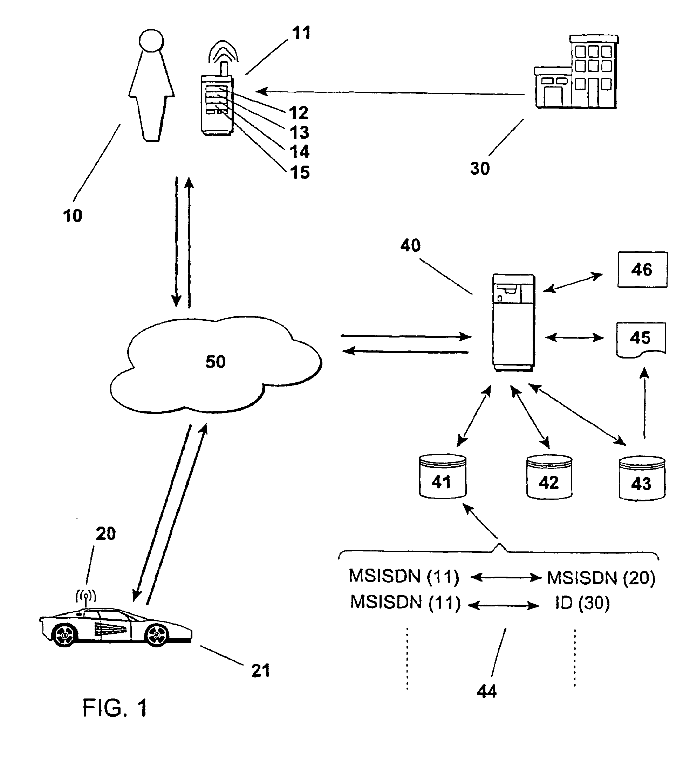

Figur 1 zeigt ein Blockdiagramm, welches den möglichen Aufbau eines Systems und Verfahrens zur computergestützten Wegweisung eines Benutzers eines Mobilfunknetzes zu einem von ihm festgelegten Bezugspunkt darstellt.
Figur 1 illustriert eine Architektur, die zur Realisierung der Erfindung verwendet werden kann. In diesem Ausführungsbeispiel legt der Benutzer 10 eines Mobilfunknetzes 50 mit seinem Mobilfunkgerät 11 ein oder mehrere mobile Bezugspunkte fest. Dazu wird der Benutzer 10 von einem Bezugspunktmodul 12 des Mobilfunkgerätes 11 aufgefordert, mindestens einen Bezugspunkt zu definieren. Das Bezugspunktmodul 12 kann software- oder hardwaremässig realisiert sein. Der Benutzer hat dazu mehrere Möglichkeiten. In einer ersten Möglichkeit kann er den aktuellen Standort des Mobilfunkgerätes 11 als Bezugspunkt festlegen. In diesem Fall kann es zur Festlegung des Bezugspunktes durch den Benutzer 10 z.B. reichen, ein dafür vorgesehenes Eingabeelement 12 des Mobilfunkgeräts 11 zu drücken. Je nach Ausführungsvariante bestimmt das Bezugspunktmodul 12 mittels eines GPS-Moduls. 14 des Mobilfunkgerätes 11 die genauen Positionsangaben und leitet den Datentransfer an die Zentraleinheit 40 ein, oder das Mobilfunkgerät 11 übermittelt nur beispielsweise die MSISDN des Mobilfunkgerätes 11 an die Zentraleinheit 40, welche Zentraleinheit 40 mittels Triangulations- und oder Trilateralisationsmethoden 46 im Mobilfunknetz 50 z.B. Signalunterschiede in Stärke, Phase und/oder Zeit dazu verwendet, die Positionsangaben des Mobilfunkgerätes 11 zu berechnen. Bei einem mobilen Bezugspunkt kann es auch sein, dass der Bezugspunkt durch ein Bezugspunktmodul der Kommunikationsmittel 20 am mobilen Bezugspunkt festlegbar ist. Zur eindeutigen Verknüpfung 44 des Mobilfunkgerätes 11 mit dem Bezugspunkt kann z.B. die MSISDN des Mobilfunkgerätes 11 verwendet werden. Die Positionsangaben des Mobilfunkgerätes 11 können beispielsweise auch mittels eines In-House-Positioning-Systems vom Bezugsmodul ermittelt werden. Das Mobilfunkgerät 11 und/oder die Kommunikationsmittel 20 des mobilen Bezugspunktes besitzen in dieser Ausführungsvariante eine Schnittstelle, wie z.B. eine kontaktlose, hochfrequente Funkschnittstelle wie Bluetooth, zu den In-House-Positioning Systemen. Die In-House Positionsangaben, welche die genaue Position des Mobilfunkgerätes 11 und/oder der Kommunikationsmittel 20 umfassen, werden über die Schnittstelle vom In-House-Positioning System an das Bezugspunktmodul des Mobilfunkgeräts 11 und/oder der Kommunikationsmittel 20 des mobilen Bezugspunktes übermittelt und das Bezugsmodul leitet den Datentransfer der Positionsangaben an die Zentraleinheit 40 ein. Die In-House Positionsangaben können beispielsweise Stockwerk, Parkplatznummer etc. umfassen. In einer anderen Möglichkeit den Bezugspunkt festzulegen, kann der Benutzer 10 mittels des Bezugspunktmoduls 12 den Bezugspunkt durch geographische Positionsangaben 30 wie z.B. relative und/oder absolute Koordinaten angeben. In einer weiteren Möglichkeit kann der Benutzer 10 auch andere mobile Kommunikationsmittel 20 des Mobilfunknetzes 50, wie z.B. ein anderes Mobilfunkgerät oder in einem Fahrzeug 21 montierte Kommunikationsmittel 20 als Bezugspunkt dem Bezugspunktmodul 12 angeben. In diesem Fall wird beispielsweise die MSISDN des Mobilfunkgerätes der MSISDN der Kommunikationsmittel 20 zugeordnet. Als eine zusätzliche Möglichkeit kann ein mobiler Bezugspunkt auch von einem anderen Mobilfunkteilnehmer, z.B. via SMS (Short Message Service) oder USSD (Unstructered Supplementary Service Data) übermittelt werden. Die übermittelten Daten zum Bezugspunkt werden vom Bezugspunktmodul 12 eingelesen und an die Zentraleinheit 40 weitergeleitet. Es ist zu erwähnen, dass die Möglichkeiten nicht alle gleichzeitig in einem Bezugspunktmodul 12 realisiert sein müssen, sondern auch einzeln oder in beliebiger Kombination realisiert sein können. Die Verknüpfungen 44 werden in der Zentraleinheit 40 in einer dafür vorgesehenen Datenbank 41 abgelegt. Ist ein Bezugspunkt durch den Benutzer 10 festgelegt, stellt die Zentraleinheit 40 beispielsweise auf Anfrage durch den Benutzer 10 geographische Informationen auf einer dem Mobilfunkgerät 11 verfügbaren Anzeige dar. Die Anzeige kann ein dem Mobilfunkgerät 11 integriertes Display oder eine damit verbunden Anzeige wie z.B. ein VRD (Virtual Retinal Display) sein. Von den geographischen Informationen umfassen mindestens gewisse kartographische Informationen, wie Ortskarten oder Landkarten, und/oder Listen von Ortsbezeichnungen. Die geographischen Informationen sind in einer Datenbank 42 der Zentraleinheit 40 abgespeichert. Die geographischen Informationen geben dem Benutzer 10 den Weg zwischen dem Standort des Benutzers 10 und dem Bezugspunkt an. Für den Datenaustausch mit der Zentraleinheit 40 können beispielsweise Protokolle wie HSCSD (High Speed Circuit Switched Data) oder GPRS (General Packet Radio Service) verwendet werden. Wurde der Bezugspunkt durch absolute Positionsangaben mittels dem Bezugspunktmodul 12 festgelegt, stellt die Zentraleinheit die entsprechenden Wegweisungsdaten bereit, welche Daten den Weg zwischen Bezugspunkt und Benutzer 10 angeben. Umfassen die Kommunikationsmittel 20 des mobilen Bezugspunktes ebenfalls ein GPS-Modul mit einem GPS-Empfänger, so kann die Zentraleinheit 40 die Positionsangaben des Bezugspunktes mittels der Kommunikationsmittel 20 abfragen. Falls die mobilen Kommunikationsmittel 20 kein GPS umfassen, können die Positionsangaben von der Zentraleinheit 40 z.B. mittels Triangulations- und oder Trilateralisationsmethoden 46 über z.B. Signalunterschiede in Stärke, Phase und/oder Zeit der Basisstationen im Mobilfunknetz 50 berechnet werden. Der Benutzer 10 hat ebenfalls die Möglichkeit, zusätzlich zu den geographischen Informationen, Informationen betreffend öffentliche Verkehrsmittel von der Zentraleinheit abzurufen. Diese Informationen können Abfahrtsort, Abfahrtszeit, Preis, Anzahl noch nicht verkaufter Plätze und/oder Reservationen umfassen. Die Informationen bezüglich der öffentlichen Verkehrsmittel sind ebenfalls in einer Datenbank 43 der Zentraleinheit 40 abgespeichert. Der Benutzer 11 kann überdies mittels eines Billettemoduls 45 der Zentraleinheit 40 Billette reservieren oder mit dem Mobilfunkgerät 11 beziehen, welche Billette für den Weg zwischen dem Standort des Benutzers 10 und dem Bezugspunkt verwendet werden können. Als Option kann im Ausführungsbeispiel das Mobilfunkgerät 11 ein Modul 15 zur Bestimmung der Himmelsrichtungen relativ zum Mobilfunkgerät 11 umfassen. Dieses Modul 15 erlaubt es, geographische Informationen entsprechend der relativen Position des Mobilfunkgeräts 11 zu den Himmelsrichtungen am Standort des Benutzers darzustellen und so den Benutzer 10 zum festgelegten Bezugspunkt zu führen. Das Modul 15 zur Bestimmung der Himmelsrichtungen kann z.B. einen digitalen Kompass umfassen.

## Patentansprüche

1. Verfahren zur Festlegung eines mobilen Bezugspunktes und zur computergestützten Wegweisung eines mit einem Mobilfunkgerät (11) ausgerüsteten Benutzers (10) zu diesem mobilen Bezugspunkt, wobei auf mittels des Mobilfunkgeräts (11) durchgeführte Anfrage eine Zentraleinheit (40) Wegweisungsdaten über ein Mobilfunknetz (50) an das Mobilfunkgerät (11) übermittelt, **dadurch gekennzeichnet,**
**dass** der mobile Bezugspunkt durch den Benutzer (10) festgelegt wird, wobei Bezugspunktdaten, die einen Identifikationscode des mobilen Bezugspunktes umfassen, über das Mobilfunknetz (50) an die Zentraleinheit (40) übertragen werden, und wobei die Bezugspunktdaten einem Identifikationscode des Mobilfunkgeräts (11) zugeordnet in einer Datenbank (41) der Zentraleinheit (40) gespeichert werden,
**dass** der aktuelle Standort des Benutzers (10) und des mobilen Bezugspunktes bestimmt wird, und
**dass** die Wegweisungsdaten in Form von kartographischen, auf einer dem Mobilfunkgerät (11) verfügbaren Anzeige graphisch darstellbaren Daten (42) oder in Form von Listen mit Ortsbezeichnungen an das Mobilfunkgerät (11) übermittelt werden, wobei die Wegweisungsdaten den Weg vom bestimmten aktuellen Standort zum festgelegten mobilen Bezugspunkt betreffen.

2. Verfahren nach Anspruch 1, **dadurch gekennzeichnet, dass** der aktuelle Standort des Mobilfunkgerätes (11) von einem Bezugspunktmodul (12) des Mobilfunkgeräts (11) oder von der Zentraleinheit (40) bestimmt und vom Benutzer (10) als Bezugspunkt festgelegt wird oder dass der Bezugspunkt durch geographische Positionsangaben (30), welche der Benutzer mittels Eingabeelementen des Mobilfunkgerätes eingibt, festgelegt wird.

3. Verfahren nach Anspruch 1, **dadurch gekennzeichnet, dass** der Standort von Kommunikationsmitteln (20), welche unabhängig vom Mobilfunkgerät (11) sind, als Bezugspunkt festgelegt wird.

4. Verfahren nach Anspruch 3, **dadurch gekennzeichnet, dass** der Standort eines Fahrzeuges (21) mit Kommunikationsmitteln (20) als Bezugspunkt festgelegt wird.

5. Verfahren nach einem der Ansprüche 1 bis 4, **dadurch gekennzeichnet, dass** zum Ermitteln von Positionsdaten des Bezugspunktes und/oder des Standortes des Benutzers (10) ein Global-Positioning-System und/oder ein In-House-Positioning-System verwendet wird.

6. Verfahren nach einem der Ansprüche 1 bis 5, **dadurch gekennzeichnet, dass** die Zentraleinheit Positionsdaten des Bezugspunktes und/oder des Standortes des Benutzers (10) durch Triangulations- und/oder Trilateralisationsmethoden mittels Signalunterschieden von Basisstationen des Mobilfunknetzes (50) bestimmt.

7. Verfahren nach einem der Ansprüche 1 bis 6, **dadurch gekennzeichnet, dass** die Wegweisungsdaten (42) zusätzlich Informationen (43) betreffend öffentliche Verkehrsmittel umfassen, welche öffentlichen Verkehrsmittel vom Benutzer (10) verwendet werden können, um von seinem Standort zum Bezugspunkt zu gelangen.

8. Verfahren nach einem der Ansprüche 1 bis 7, **dadurch gekennzeichnet, dass** der Benutzer (10) mittels des Mobilfunkgerätes (11) über die Zentraleinheit (40) Billette für die öffentlichen Verkehrsmittel bezieht, welche öffentlichen Verkehrsmittel vom Benutzer (10) benutzt werden, um von seinem Standort zum Bezugspunkt zu gelangen.

9. Verfahren nach einem der Ansprüche 1 bis 8, **dadurch gekennzeichnet, dass** der Benutzer (10) den Bezugspunkt unter Verwendung des Mobilfunkgerätes (11) an mindestens einen anderen Benutzer des Mobilfunknetzes (50) übermittelt.

10. Verfahren nach einem der Ansprüche 1 bis 9, **dadurch gekennzeichnet, dass** das Mobüfunkgerät (11) die kartographischen Wegweisungsdaten, welche mindestens Ortskarten und/oder Landkarten umfassen, entsprechend der relativen Position des Mobilfunkgerätes (11) zu den Himmelsrichtungen darstellt.

11. System für die Festlegung eines mobilen Bezugspunktes und für die computergestützte Wegweisung eines mit einem Mobilfunkgerät (11) ausgerüsteten Benutzers (10) zu diesem mobilen Bezugspunkt, welches System ein Mobilfunknetz (50), mindestens ein Mobilfunkgerät (11) und eine Zentraleinheit (40) mit Datenbank (41/42/43) umfasst, **dadurch gekennzeichnet,**
**dass** das Mobilfunkgerät (11) ein Bezugspunktmodul (12) umfasst, mittels welchem ein Bezugspunkt vom Benutzer (10) festlegbar ist und welches Bezugspunktmodul (12) Bezugspunktdaten, die einen Identifikationscode eines mobilen Bezugspunktes umfassen, erstellt und/oder berechnet und den Datentransfer der Bezugspunktdaten über das Mobilfunknetz (50) an die Zentraleinheit (40) einleitet,
**dass** die Zentraleinheit (40) Mittel (44) umfasst, welches die Bezugspunktdaten einem Identifikationscode des Mobilfunkgeräts (11) und/oder einem Identifikationscode des Benutzers (10) zugeordnet in einer Datenbank (41) der Zentraleinheit (40) abspeichert,
**dass** das Mobilfunkgerät (11) und/oder die Zentraleinheit (40) Mittel zur Bestimmung des Standortes des Benutzers (10) und des mobilen Bezugspunktes umfassen und
**dass** die Zentraleinheit (40) eine Datenbank (42) mit Wegweisungsdaten umfasst, weiche Wegweisungsdaten mindestens teilweise kartographische Daten oder Daten in Form von Listen mit Ortsbezeichnungen umfassen, wobei die Zentraleinheit so eingerichtet ist, dass sie mittels der Datenbank (42) Wegweisungsdaten für den Weg vom aktuellen Standort des Benutzers (10) zum festgelegten mobilen Bezugspunkt bereitstellt und/oder berechnet.

12. System nach Anspruch 11, **dadurch gekennzeichnet, dass** das Mobilfunkgerät ein Bezugspunktmodul (12) umfasst, mittels welchem der momentane Standort des Mobilfunkgerätes als ein Bezugspunkt festlegbar ist.

13. System nach Anspruch 12, **dadurch gekennzeichnet, dass** das System eine als mobiler Bezugspunkt festlegbare Vorrichtung umfasst, welche Vorrichtung Kommunikationsmittel (20) umfasst, welche unabhängig zum Mobilfunkgerät (11) des Benutzers (10) sind.

14. System nach Anspruch 13, **dadurch gekennzeichnet, dass** das System eine als mobiler Bezugspunkt festlegbare Vorrichtung umfasst, welche Vorrichtung ein Fahrzeug (21) mit Kommunikationsmittel (20) umfasst.

15. System nach einem der Ansprüche 11 bis 14, **dadurch gekennzeichnet, dass** die Kommunikationsmittel (20) des mobilen Bezugspunktes und/oder das Mobilfunkgerät (11) des Benutzers (10) ein GPS-Modul (14) mit einem GPS-Empfänger und/oder ein In-House-Positioning-Systeme zur Positionsbestimmung der Kommunikationsmittel (20) des mobilen Bezugspunktes und/oder des Standortes des Mobilfunkgerätes (11) umfassen.

16. System nach einem der Ansprüche 11 bis 15, **dadurch gekennzeichnet, dass** die Zentraleinheit (40) ein Triangulations- und/oder ein Trilateralisationsmodul (46) umfasst, mittels welchen die Positionsangaben des Bezugspunktes (20) und/oder des Mobilfunkgerätes (11) unter Verwendung der Signalunterschiede von Basisstationen des Mobilfunknetzes (50) berechenbar sind.

17. System nach einem der Ansprüche 11 bis 16, **dadurch gekennzeichnet, dass** die kartographischen Wegweisungsdaten (42) zusätzlich Informationen (43) betreffend die öffentlichen Verkehrsmittel umfassen, welche öffentlichen Verkehrsmittel vom Benutzer für den Weg zwischen seinem Standort und dem Bezugspunkt verwendbar sind.

18. System nach einem der Ansprüche 11 bis 17, **dadurch gekennzeichnet, dass** die Zentraleinheit (40) ein Billettebezugsmodul (45) umfasst, mittels welchem der Benutzer Billette und Reservationen für Billette für öffentliche Verkehrsmittel beziehen kann, welche öffentlichen Verkehrsmittel vom Benutzer für den Weg zwischen seinem Standort und dem Bezugspunkt verwendbar sind.

19. System nach einem der Ansprüche 11 bis 18, **dadurch gekennzeichnet, dass** das Mobilfunkgerät (11) ein Transfermodul (13) umfasst, mittels welchem Angaben betreffend einen Bezugspunkt an andere Benutzer des Mobilfunknetzes (50) übermittelbar sind.

20. System nach einem der Ansprüche 11 bis 19, **dadurch gekennzeichnet, dass** das Mobilfunkgerät (11) ein Modul (15) zur Bestimmung von Himmelsrichtungen umfasst, mittels welchen die Karten und/oder Bitmaps entsprechend der geographischen Orientierung des Mobilfunkgeräts (11) darstellbar sind.

## Revendications

1. Procédé pour la détermination d'un point de référence mobile et pour la navigation assistée par ordinateur d'un utilisateur équipé d'un périphérique de radiotéléphonie mobile (11) vers ce point mobile de référence, sur demande effectuée au moyen du périphérique de radiotéléphonie mobile (11), une unité centrale (40) transmettant des données de navigation par un réseau de téléphonie mobile (5) au périphérique de téléphonie mobile (11), **caractérisé en ce que**
le point de référence mobile est déterminé par l'utilisateur (10), des données de points de référence qui comprennent un code d'identification du point mobile de référence étant transmises par le réseau de téléphonie mobile (50) à l'unité centrale (40), et les données de point de référence étant associées à un code d'identification du périphérique de téléphonie mobile (11) et stockées dans une banque de données (41) de l'unité centrale (40),
**en ce que** le lieu actuel de l'utilisateur 10 et du point mobile de référence est déterminé et
**en ce que** les données de navigation sont transmises au périphérique de radiotéléphonie mobile (11) sous forme de données cartographiques (42) représentables graphiquement sur un écran disponible du périphérique de téléphonie mobile (11) ou sous forme de listes avec désignations de lieu, les données de navigation concernant l'itinéraire entre le lieu actuel défini et le point mobile de référence défini.

2. Procédé selon la revendication 1, **caractérisé en ce que** le lieu actuel du périphérique de téléphonie mobile (11) est déterminé par un module de point de référence (12) du périphérique de radiotéléphonie mobile (11) ou par l'unité centrale (40) et par l'utilisateur (10) comme point de référence ou **en ce que** le point de référence est déterminé par des indications géographiques de position (30) que saisit l'utilisateur au moyen d'éléments de saisie du périphérique de radiotéléphonie mobile.

3. Procédé selon la revendication 1, **caractérisé en ce que** le lieu de moyens de communication (20) qui sont indépendants du périphérique de radiotéléphonie mobile (11) est déterminé comme point de référence.

4. Procédé selon la revendication 3, **caractérisé en ce que** le lieu d'un véhicule (21) avec des moyens de communication (20) est déterminé comme point de référence.

5. Procédé selon l'une des revendications 1 à 4, **caractérisé en ce que** pour la détermination de données de position du point de référence et/ou du lieu de l'utilisateur (10), il est utilisé un système de positionnement global et/ou en système de positionnement interne.

6. Procédé selon l'une des revendications 1 à 5, **caractérisé en ce que** l'unité centrale définit des données de position du point de référence et/ou du lieu de l'utilisateur (10) par des méthodes de triangulation et/ou de trilatéralisation au moyen de différences de signaux de station de base du réseau de téléphonie mobile (50).

7. Procédé selon l'une des revendications 1 à 6, **caractérisé en ce que** les données de navigation (42) comprennent des informations supplémentaires (43) concernant des moyens de transport public, moyens de transport public qui peuvent être empruntés par l'utilisateur (10) pour aller du lieu où il se trouve au point de référence.

8. Procédé selon l'une des revendications 1 à 7, **caractérisé en ce que** l'utilisateur (10) perçoit des tickets pour les moyens de transport public au moyen du périphérique de radiotéléphonie mobile (11) par l'unité centrale (40), moyens de transport public qui sont empruntés par l'utilisateur (10) pour aller du lieu où il se trouve au point de référence.

9. Procédé selon l'une des revendications 1 à 8, **caractérisé en ce que** l'utilisateur (10) transmet le point de référence en utilisant le périphérique de radiotéléphonie mobile (11) à au moins un autre utilisateur du réseau de téléphonie mobile (50).

10. Procédé selon l'une des revendications 1 à 9, **caractérisé en ce que** le périphérique de radiotéléphonie mobile (11) représente les données de navigation cartographiques qui comprennent au moins des cartes régionales ou nationales en fonction de la position relative du périphérique de téléphonie mobile (11) par rapport à l'orientation.

11. Système pour la détermination d'un point mobile de référence et pour la navigation assistée par ordinateur d'un utilisateur (10) muni d'un périphérique de radiotéléphonie mobile (11) à ce point mobile de référence, système qui comprend un réseau de téléphonie mobile (50), au moins un périphérique de radiotéléphonie mobile (11) et une unité centrale (40) avec une banque de données (41/42/43), **caractérisé en ce que**
le périphérique de radiotéléphonie mobile (11) comprend un module de point de référence (12), au moyen duquel un point de référence est déterminable par l'utilisateur (10) et module de point de référence (12) qui établit et/ou calcule des données de point de référence qui comprennent un code d'identification d'un point mobile de référence et qui introduit le transfert de données de point de référence par le réseau de téléphonie mobile (50) à l'unité centrale (40).
**en ce que** l'unité centrale (40) comprend des moyens (44) qui associent les données de points de référence à un code d'identification du périphérique de téléphonie mobile (11) et/ou un code d'identification de l'utilisateur (10) et les stockent dans une banque de données (41) de l'unité centrale (40),
**en ce que** le périphérique de radiotéléphonie mobile (11) et/ou l'unité centrale (40) comprennent des moyens pour la détermination du lieu de l'utilisateur (10) et du point mobile de référence et
**en ce que** l'unité centrale (40) comprend une banque de données (42) avec des données de navigation, données de navigation qui comprennent au moins partiellement des données cartographiques ou des donnés sous forme de listes avec des désignations de lieu, l'unité centrale étant paramétrée de sorte qu'elle prépare et/ou calcule au moyen de la banque de données (42) des données de navigation pour l'itinéraire entre le lieu actuel de l'utilisateur (10) et le point mobile de référence.

12. Système selon la revendication 11, **caractérisé en ce que** le périphérique de téléphonie mobile comprend un module de point de référence (12) au moyen duquel le lieu momentané du périphérique de téléphonie mobile (11) est déterminable comme point de référence.

13. Système selon la revendication 12, **caractérisé en ce que** le système comporte un dispositif déterminable comme point mobile de référence, dispositif qui comprend des moyens de communication (20), qui ne dépendent pas du périphérique de téléphonie mobile (11) de l'utilisateur (10).

14. Système selon la revendication 13, **caractérisé en ce que** le système comprend un dispositif déterminable comme point mobile de référence, dispositif qui comprend un véhicule (21) avec des moyens de communication (20).

15. Système selon l'une des revendications 11 à 14, **caractérisé en ce que** les moyens de communication (20) du point mobile de référence et/ou du périphérique de radiotéléphonie mobile (11) de l'utilisateur (10) comprennent un module GPS (14) avec un récepteur GPS et/ou un système de positionnement interne pour la détermination de position des moyens de communication (20) du point mobile de référence et/ou du lieu du périphérique de téléphonie mobile (11).

16. Système selon l'une des revendications 11 à 15, **caractérisé en ce que** l'unité centrale (40) comprend un module de triangulation et/ou de trilatéralisation (46), au moyen duquel les indications de position du point de référence (20) et/ou du périphérique de téléphonie mobile (11) sont calculables en utilisant des différences de signaux provenant de stations de base du réseau de téléphonie mobile (50).

17. Système selon l'une des revendications 11 à 16, **caractérisé en ce que** les données cartographiques de navigation (42) comprennent en supplément des informations (43) concernant les moyens de transport public, moyens de transport public qui sont utilisables par l'utilisateur pour l'itinéraire entre son lieu et le point de référence.

18. Système selon l'une des revendications 11 à 17, **caractérisé que** l'unité centrale (40) comprend un module de distribution de tickets (45), au moyen duquel l'utilisateur peut se procurer des tickets et des réservations pour des tickets de transport public, moyens de transport public qui sont utilisables par l'utilisateur pour l'itinéraire entre son lieu et le point de référence.

19. Système selon l'une des revendications 11 à 18, **caractérisé en ce que** le périphérique de téléphonie mobile (11) comprend un module de transfert (13) au moyen duquel sont déterminables des indications concernant un point de référence à un autre utilisateur du réseau de téléphonie mobile (50).

20. Système selon l'une des revendications 11 à 19, **caractérisé en ce que** le périphérique de téléphonie mobile (11) comprend un module (15) pour la détermination d'orientations, au moyen desquels les cartes et/ou les bitmaps sont représentables en fonction de l'orientation géographique du périphérique de téléphonie mobile (11).

## Claims

1. Method for defining a mobile reference point and for computer-assisted guiding of a user (10), equipped with a mobile radio device (11), to said reference point, whereby a central unit (40) transmits guiding data via a mobile radio network (50) to the mobile radio device (11) upon request made by means of the mobile radio device (11), **characterised**
**in that** the mobile reference point is defined by the user (10), reference point data, containing an identification code for the mobile reference point, being transmitted via the mobile radio network (50) to the central unit (40), and the reference point data being stored, assigned to an identification code of the mobile radio device (11), in a database (41) of the central unit (40),
**in that** the current location of the user (10) and of the mobile reference point is identified, and
**in that** the guiding data are transmitted to the mobile radio device (11) in the form of cartographic data (42) graphically shown on a display available to the mobile radio device (11) or in the form of lists with place designations, the guiding data relating to the route from the identified current location to the defined mobile reference point.

2. Method according to claim 1, **characterised in that** the current location of the mobile radio device (11) is identified by a reference point module (12) of the mobile radio device (11) or by the central unit (40), and is defined as the reference point by the user (10), or **in that** the reference point is defined using geographic position data (30) which the user enters by means of input elements of the mobile radio device.

3. Method according to claim 1, **characterised in that** defined as the reference point is the location of communication means (20) which are independent of the mobile radio device (11).

4. Method according to claim 3, **characterised in that** defined as the reference point is the location of a vehicle (21) with communication means (20).

5. Method according to one of the claims 1 to 4, **characterised in that** for determining position data for the reference point and/or for the location of the user (10) a global positioning system and/or an in-house positioning system is used.

6. Method according to one of the claims 1 to 5, **characterised in that** the central unit determines position data for the reference point and/or for the location of the user (10) through triangulation methods and/or trilateralization methods using signal differences of base stations of the mobile radio network (50).

7. Method according to one of the claims 1 to 6, **characterised in that** the guiding data (42) further comprise information (43) relating to means of public transportation, which means of public transportation are able to be used by the user (10) to get from his location to the reference point.

8. Method according to one of the claims 1 to 7, **characterised in that**, via the central unit (40), using the mobile radio device (11), the user (10) obtains tickets for the means of public transportation, which means of public transportation are used by the user (10) to get from his location to the reference point.

9. Method according to one of the claims 1 to 8, **characterised in that**, using the mobile radio device (11), the user (10) transmits the reference point to at least one other user of the mobile radio network (50).

10. Method according to one of the claims 1 to 9, **characterised in that** the mobile radio device (11) shows the cartographic guiding data, comprising at least maps of places and/or countries, in a way corresponding to the position of the mobile radio device (11) relative to the points of the compass or cardinal points.

11. System for defining a mobile reference point and for computer-assisted guiding of a user (10) equipped with a mobile radio device (11) to this mobile reference point, which system comprises a mobile radio network (50), at least one mobile radio device (11) and a central unit (40) with database (41/42/43), **characterised**
**in that** the mobile radio device (11) comprises a reference point module (12), by means of which a reference point is definable by the user (10), and which reference point module (12) generates and/or calculates reference point data, including an identification code for a mobile reference point, and initiates the data transfer of the reference point data to the central unit (40) over the mobile radio network (50),
**in that** the central unit (40) comprises means (44) which store the reference point data in a database (41) of the central unit (40) in a way assigned to an identification code of the mobile radio device (11) and/or to an identification code of the user (10),
**in that** the mobile radio device (11) and/or the central unit (40) comprise means for identifying the location of the user (10) and of the mobile reference point, and
**in that** the central unit (40) comprises a database (42) with guiding data, which guiding data contain at least in part cartographic data or data in the form of lists with place designations, the central unit being set up such that it provides, prepares and/or calculates, by means of the database (42), guiding data for the route from the current location of the user (10) to the defined mobile reference point.

12. System according to claim 11, **characterised in that** the mobile radio device comprises a reference point module (12), by means of which the momentary location of the mobile radio device is definable as a reference point.

13. System according to claim 12, **characterised in that** the system comprises a device definable as the mobile reference point, which device comprises communication means (20) that are independent from the mobile radio device (11) of the user (10).

14. System according to claim 13, **characterised in that** the system comprises a device definable as the mobile reference point, which device comprises a vehicle (21) with communication means (20).

15. System according to one of the claims 11 to 14, **characterised in that** the communication means (20) of the mobile reference point and/or the mobile radio device (11) of the user (10) include a GPS module (14) with a GPS receiver and/or an in-house positioning system for position determination of the communication means (20) of the mobile reference point and/or of the location of the mobile radio device (11).

16. System according to one of the claims 11 to 15, **characterised in that** the central unit (40) comprises a triangulation module and/or a trilateralization module (46), by means of which the position data of the reference point (20) and/or of the mobile radio device (11) are calculable using the differences in signals of base stations of the mobile radio network (50).

17. System according to one of the claims 11 to 16, **characterised in that** the cartographic guiding data (42) further comprise information (43) relating to means of public transportation, which means of public transportation are usable by the user for the way between his location and the reference point..

18. System according to one of the claims 11 to 17, **characterised in that** the central unit (40) comprises a ticket dispensing module (45), by means of which the user is able to obtain tickets and reservations for tickets for means of public transportation, which means of public transportation are usable by the user for the way between his location and the reference point.

19. System according to one of the claims 11 to 18, **characterised in that** the mobile radio device (11) comprises a transfer module (13), by means of which data relating to a reference point are transmittable to another user of the mobile radio network (50).

20. System according to one of the claims 11 to 19, **characterised in that** the mobile radio device (11) comprises a module (15) for determining the points of the compass or cardinal points, by means of which the maps and/or bit maps are able to be shown in a way corresponding to the geographic orientation of the mobile radio device (11).
